(19) Europäisches Patentamt / European Patent Office / Office européen des brevets

(11) **EP 4 361 217 A1**

(12) **EUROPEAN PATENT APPLICATION**
published in accordance with Art. 153(4) EPC

(43) Date of publication:
**01.05.2024 Bulletin 2024/18**

(21) Application number: **22828115.0**

(22) Date of filing: **24.05.2022**

(51) International Patent Classification (IPC):
***C08L 33/14*** (2006.01)   ***C08K 3/22*** (2006.01)
***C08K 3/32*** (2006.01)

(52) Cooperative Patent Classification (CPC):
**C08K 3/22; C08K 3/32; C08L 33/14**

(86) International application number:
**PCT/JP2022/021199**

(87) International publication number:
**WO 2022/270196 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2021   JP 2021103526**

(71) Applicant: **ThreeBond Co., Ltd.
Tokyo 192-0398 (JP)**

(72) Inventors:
• **NISHIZAWA, Takuto**
**Hachioji-shi, Tokyo 192-0398 (JP)**
• **FUKUMOTO, Masayuki**
**Hachioji-shi, Tokyo 192-0398 (JP)**
• **TAKAHASHI, Ryosuke**
**Hachioji-shi, Tokyo 192-0398 (JP)**

(74) Representative: **Crow, Martin et al
Venner Shipley LLP
200 Aldersgate
London EC1A 4HD (GB)**

(54) **MOISTURE-CURABLE RESIN COMPOSITION**

(57)    A moisture-curable resin composition contains components (A) to (D) as follows:
component (A): a (meth)acrylic polymer having a hydrolyzable silyl group;
component (B): a metal hydroxide flame retardant;
component (C): a phosphorus-based flame retardant; and
component (D): a curing catalyst.

According to the present invention, provided is a moisture-curable resin composition which has an extremely low content of low-molecular siloxane and which gives cured products having an excellent flame retardancy corresponding to V-0 and simultaneously being high in flexibility and resin strength.

EP 4 361 217 A1

**Description**

**TECHNICAL FIELD**

The present invention relates to a moisture-curable resin composition having excellent flame retardancy corresponding to V-0 and flexibility.

**BACKGROUND ART**

In recent years, as automobiles have become more electrically powered, installation of electrical parts on automobiles has increased. In view of weight reduction in conjunction with lowering fuel consumption of automobiles, dissimilar materials that are combinations of a metal part and an engineering plastic part are used for electrical parts, and use of adhesives and sealants between the dissimilar materials has also increased. Since the dissimilar materials have different linear expansion coefficients and strains are therefore generated due to the difference in thermal expansion coefficients, adhesives and sealants to be used for the dissimilar materials need followability. As the adhesives and sealants requiring such followability, materials containing curing silicone-based resins are known; for example, International Publication No. WO 2011/089987 proposes a flame-retardant moisture-curable resin composition containing a curing silicone-based resin having a specific structure.

**SUMMARY OF INVENTION**

However, many of the conventional adhesives and sealants having flame retardancy have low flexibility, and it cannot be said that the followability of these adhesives and sealants to the difference in linear expansion between dissimilar materials and the stresses from the outsides is sufficient. On the other hand, flame-retardant adhesives and sealants having high flexibility have a low resin strength in inverse proportion to high flexibility, which is problematic.

For the installation of electrical parts on automobiles as described above, from the viewpoint of fears of flame retardancy and contact failure, an adhesive and a sealant are demanded which are almost free of low-molecular siloxane (contain almost no low-molecular weight siloxane compound). However, many adhesives and sealants having high flexibility contain a curing silicone resin, and such adhesives and sealants contain a low-molecular siloxane, which raises concerns about their use for electrical parts. Further, although there are some adhesives and sealants containing no low-molecular siloxane and having high flexibility, these have insufficient flame retardancy.

The present invention has been made in view of the above situation, and has an object to provide a moisture-curable resin composition which has an extremely low content of low-molecular siloxane and of which cured products are excellent in flame retardancy, flexibility and resin strength (tensile strength). Another object of the present invention is to provide a cured product obtained by using the moisture-curable resin composition.

As a result of intensive studies to achieve the above object, the present inventors have found techniques for obtaining a moisture-curable resin composition which has an extremely low content of low-molecular siloxane and which can form a cured product excellent in flame retardancy, flexibility and resin strength (tensile strength), and have completed the present invention. Then, the evaluation of the flexibility in the present description was made by carrying out measurement of the elongation percentage according to JIS K6251:2017; and it is determined that higher elongation percentage corresponds to higher flexibility.

The gist of the present invention will be described hereinafter.

1. A moisture-curable resin composition containing components (A) to (D) as follows:

component (A): a (meth)acrylic polymer having a hydrolyzable silyl group;

component (B): a metal hydroxide flame retardant;

component (C): a phosphorus-based flame retardant; and

component (D): a curing catalyst.

2. The moisture-curable resin composition according to the above 1., wherein the component (B) is aluminum hydroxide.

3. The moisture-curable resin composition according to the above 1. or 2., wherein a total content of the component (B) and the component (C) is 50 to 300 parts by mass relative to 100 parts by mass of the component (A).

4. The moisture-curable resin composition according to any one of the above 1. to 3., wherein a mass ratio of the component (B) and the component (C) is 9 : 1 to 1 : 9.

5. The moisture-curable resin composition according to any one of the above 1. to 4., wherein the component (C) contains a phosphorus-based flame retardant in a liquid form at 25°C.

6. The moisture-curable resin composition according to any one of the above 1. to 5., wherein the component (D) is a zinc catalyst.

7. The moisture-curable resin composition according to any one of the above 1. to 6., further containing an inorganic filler as a component (E).

8. The moisture-curable resin composition according to any one of the above 1. to 7., further containing a silane coupling agent as a component (F).

9. A cured product obtained by curing the moisture-curable resin composition according to any one of the above 1. to 8.

**DESCRIPTION OF EMBODIMENTS**

The details of the present invention will be described hereinafter. Here, in the present description, "X to Y" is used in a meaning including the numerical values described before and after "to" (X and Y) as the lower limit value and the upper limit value, respectively, and means "X or more and Y or less". The concentration and % represent mass concentration and % by mass, respectively, unless otherwise specified; and a ratio is a mass ratio unless otherwise specified. Operations and measurements of physical properties and the like are carried out under the condition of room temperature (20 to 25°C) and a relative humidity of 40 to 55 RH, unless otherwise specified. Further, "A and/or B" means including either or both of A and B.

<Moisture-curable resin composition>

A moisture-curable resin composition (hereinafter, "moisture-curable resin composition" or referred to also simply as "resin composition") according to one aspect of the present invention contains components (A) to (D) as follows:

component (A): a (meth)acrylic polymer having a hydrolyzable silyl group;

component (B): a metal hydroxide flame retardant;

component (C): a phosphorus-based flame retardant; and

component (D): a curing catalyst.

That is, the moisture-curable resin composition contains components (A) to (D) to be hereinafter described in detail. By containing these components, the moisture-curable resin composition according to the present invention has an extremely low content of low-molecular siloxane and can form a cured product excellent in flame retardancy, flexibility and resin strength (tensile strength).
Hereinafter, each component contained in the moisture-curable resin composition will be described.

[Component (A)]

A component (A) contained in the moisture-curable resin composition according to the present invention is a (meth)acrylic polymer having a hydrolyzable silyl group (hereinafter, referred to also simply as "(meth)acrylic polymer"). A (meth)acrylic polymer as a component (A) is a major raw material that is excellent in flexibility and that exhibits excellent flame retardancy in combination with a component (B) and a component (C) described later. Further, the (meth)acrylic polymer has an advantage that it has an extremely low content of low-molecular siloxane (low-molecular weight siloxane compound).
A (meth)acrylic polymer as a component (A) is not especially limited as long as being a (meth)acrylic polymer having, in one molecule thereof, one or more hydrolyzable silyl groups capable of being crosslinked by moisture curing.

From the viewpoints of the resin strength and the curability, it is preferable that the (meth)acrylic polymer have two or more hydrolyzable silyl groups. A hydrolyzable silyl group can be present on either a side chain and/or a terminal of the molecule; but it is preferable that the (meth)acrylic polymer have a hydrolyzable silyl group on a terminal (molecular chain terminal), and it is more preferable that the (meth)acrylic polymer have a hydrolyzable silyl group on each of both terminals (particularly, both terminals of the main chain).

In the present description, the "hydrolyzable silyl group" refers to a group capable of being crosslinked by causing condensation reaction to form a siloxane bond. Specifically, the hydrolyzable silyl group is a functional group having 1 to 3 hydrolyzable group(s) bonded to a silicon atom. The hydrolyzable group includes halogen atoms (fluorine atom, chlorine atom, bromine atom, iodine atom), alkoxy groups, acyl oxide groups, ketoximate groups, an amino group, an amido group, an aminooxy group and alkenyl oxide groups; but from the viewpoint of the curability, alkoxy groups are preferable.

The hydrolyzable silyl groups having an alkoxy group include monoalkoxysilyl groups, dialkoxysilyl groups and trialkoxysilyl groups. Among these, from the viewpoint of simultaneously satisfying both of the elongation percentage and the resin strength, dialkoxysilyl groups are preferable.

The alkoxy group includes straight-chain alkyloxy groups (alkoxy groups) such as a methoxy group, an ethoxy group, an n-propyloxy group, an n-butoxy group and an n-pentyloxy group; branched-chain alkyloxy groups (alkoxy groups) such as an isopropyloxy group, an isobutyloxy group, a sec-butyloxy group and a tert-butoxy group; cyclic alkyloxy groups (alkoxy groups) such as a cyclobutyloxy group and a cyclopentyloxy group; aryloxy groups such as a phenoxy group; and aralkyloxy groups such as a benzyloxy group; but, from the viewpoint of simultaneously satisfying both of the elongation percentage and the resin strength, straight-chain alkyloxy groups (alkoxy groups) having 1 to 3 carbon atoms are preferable and a methoxy group and an ethoxy group are more preferable. These alkoxy groups may be contained singly or in a combination of different kinds thereof.

Examples of the hydrolyzable silyl group having an above preferable alkoxy group include a dimethoxysilyl group, a methyldimethoxysilyl group, a diethoxysilyl group, a methyldiethoxysilyl group, a trimethoxysilyl group and a triethoxysilyl group. Among these, from the viewpoint of simultaneously satisfying both of the elongation percentage and the resin strength, a dimethoxysilyl group and a methyldimethoxysilyl group are preferable.

A (meth)acrylic polymer as a component (A) refers to a polymer of a (meth)acrylic monomer. A (meth)acrylic monomer constituting the (meth)acrylic polymer as the component (A) may be used singly or in a combination of two or more kinds thereof. The (meth)acrylic polymer may further contain monomer units other than the (meth)acrylic monomer. In the present description, the "(meth)acrylic" is the generic term of acrylic and methacrylic; and the "(meth)acrylic monomer" is a generic term of monomers having an acrylic group (acryloyl group) ($H_2C=CH-C(=O)-$) or a methacrylic group (methacryloyl group) ($H_2C=C(CH_3)-C(=O)-$) . Here, the (meth)acryloyl group may be contained as a form of a (meth)acryloyloxy group.

Specific examples of the (meth)acrylic monomer constituting the (meth)acrylic polymer include, though are not limited to, (meth)acrylic acid; (meth)acrylate monomers such as methyl (meth)acrylate, ethyl (meth)acrylate, (meth)acrylate esters, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate), dodecyl (meth)acrylate, stearyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, glycidyl (meth)acrylate, 2-aminoethyl (meth)acrylate, $\gamma$-(methacryloyloxypropyl)trimethoxysilane, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate and 2-perfluorohexadecylethyl (meth)acrylate; and the ethyleneoxide adducts of (meth)acrylic acid. These (meth)acrylic monomers may be used singly or in a combination of two or more kinds thereof. It is preferable that the monomer constituting the component (A) contained in the moisture-curable resin composition according to the present invention contain at least one selected from the group consisting of the above-mentioned (meth)acrylic monomers. More preferably, the monomer constituting the component (A) contains a (meth)acrylate monomer (a (meth)acrylate ester, that is, an ester monomer having a (meth)acryloyl group); especially preferably, the monomer contains a (meth)acrylate monomer having a hydrocarbon group (a (meth)acrylate ester having a hydrocarbon group in the ester moiety); and most preferably, the monomer contains an acrylate monomer having a hydrocarbon group.

Here, the "hydrocarbon group" means a group composed of carbon atoms and hydrogen atoms bonded thereto. The hydrocarbon group includes saturated or unsaturated, straight-chain, branched-chain or cyclic hydrocarbon groups. Examples of the hydrocarbon group include aliphatic (chain) hydrocarbon groups such as straight-chain or branched-chain alkyl groups, straight-chain or branched-chain alkenyl groups and straight-chain or branched-chain alkynyl groups; alicyclic hydrocarbon groups such as cycloalkyl groups, cycloalkenyl groups and cycloalkynyl groups; aromatic hydrocarbon groups such as aryl groups; and combinations thereof, for example, aralkyl groups and arylalkyl groups.

The component (A) is preferably one in which the main component monomer constituting the component (A) is a (meth)acrylic monomer, more preferably one in which it is a (meth)acrylate monomer, and especially preferably one in which it is an acrylate monomer. That is, the component (A) is preferably one having, as the main skeleton, a polymer made by polymerizing a (meth)acrylic monomer, more preferably one having, as the main skeleton, a polymer made by polymerizing a (meth)acrylate monomer, and especially preferably one having, as the main skeleton, an acrylate monomer. Further, it is preferable that the component (A) have a hydrolyzable silyl group on a terminal (main chain terminal) of the main skeleton as described above; and it is more preferable that the component (A) have a hydrolyzable silyl group on each of both terminals (particularly, both terminals of the main chain).

From the viewpoint of the workability, it is preferable that the component (A) be in a liquid form (a liquid) at 25°C. In the present description, "being in a liquid form (a liquid) at 25°C" refers to that the viscosity measured by using a cone plate-type rotary viscometer at 25°C is 1,000 Pa·s or lower.

The viscosity at 25°C of the component (A) is, from the viewpoint of the workability as the moisture-curable resin composition, preferably 30 to 1,000 Pa·s, more preferably 50 to 600 Pa·s, especially preferably 70 to 400 Pa·s and most preferably 100 to 300 Pa·s.

A lower limit of a number-average molecular weight (Mn) of the component (A) is preferably 500 or more, more preferably 3,000 or more and especially preferably 4,000 or more; and an upper limit is preferably 100,000 or less and more preferably 50,000 or less. When the number-average molecular weight of the component (A) is 500 or more, it is likely to become easy for a cured product of the moisture-curable resin composition to develop suitable elasticity. On the other hand, when the number-average molecular weight of the component (A) is 100,000 or less, a viscosity of the moisture-curable resin composition is enabled to be held suitable. When the viscosity of the moisture-curable resin composition becomes too high, there arises a possibility of causing stringiness when the moisture-curable resin composition is discharged from a nozzle by using a dispenser or the like; but, by making the number-average molecular weight to fall within the above range, such generation of stringiness can be suppressed. Here, in the present description, the "number-average molecular weight (Mn)" to be adopted is a value calculated by measurement using gel permeation chromatography (GPC). At this time, tetrahydrofuran is used as the solvent and polystyrenes are used as standard materials.

The number of the repeating unit (monomer unit) originated from the (meth)acrylic monomer constituting the (meth)acrylic polymer as the component (A) is not especially limited, but from the viewpoint of regulating the viscosity of the moisture-curable resin composition in a suitable range and improving the workability, it is preferable that the (meth)acrylic polymer be an oligomer. In the present description, the "oligomer" refers to one having a number-average molecular weight of 300 or more and 100,000 or less.

As the component (A), either of a synthetic product or a commercially available product may be used. The component (A) can be produced by various polymerization methods and the method is not especially limited, but a radical polymerization method is preferable, from the viewpoints of the versatility of a monomer and the easiness of the reaction control. Further, among the radical polymerization, controlled radical polymerization is preferable, and living radical polymerization is more preferable, and atom transfer radical polymerization is especially preferable. As a method of introducing a hydrolyzable silyl group to a polymer of a (meth)acrylic monomer being the main chain, a well-known method can be adopted; and the method is described, for example, in Japanese Patent Laid-Open No. H09-272714 (U.S. Patent Application Publication No. 2002/0177670) and Japanese Patent Laid-Open No. H11-043512.

Specific examples of the commercially available product include XMAP(R) Series, Grade: SA100S, SA110S, SA120S, OR100S and the like, manufactured by Kaneka Corp.

The (meth)acrylic polymer as the component (A) may be used singly in one kind thereof, or may be used as a mixture of two or more kinds thereof. When two or more kinds are used together, a content of component (A) refers to the total amount.

[Component (B)]

A component (B) contained in the moisture-curable resin composition according to the present invention is a metal hydroxide flame retardant. A metal hydroxide flame retardant as a component (B) can give a cured product having excellent flame retardancy in combination with the component (C) described later.

The metal hydroxide flame retardant as the component (B) is preferably a hydroxide of a metal selected from metals included inGroup II elements (Group IIa), Group XIII elements (Group IIIb), and Group XIV elements (Group IVb) of Periodic Table, more preferably a hydroxide of a metal selected from metals included Group II elements and Group XIII elements, and especially preferably a hydroxide of a metal selected from metals included Group XIII elements. In addition, the component (B) preferably has a decomposition onset temperature in the range of 150 to 450°C.

Specific examples of the component (B) include magnesium hydroxide, aluminum hydroxide, and those whose surfaces are treated with a surface treating agent such as a silane coupling agent, a titanate-based coupling agent or a higher fatty acid. Among these, the surface treating agent is preferably a silane coupling agent.

The silane coupling agent to be used for a surface treatment of the metal hydroxide is not especially limited, and a well-known one can be used; and examples thereof include alkoxy group-containing silane coupling agents, halogen-containing silane coupling agents, amino group-containing silane coupling agents, mercapto group-containing silane coupling agents, vinyl group-containing silane coupling agents, epoxy group-containing silane coupling agents, acetoxy group-containing silane coupling agents, acryloxy group (acryloyloxy group)-containing silane coupling agents and methacryloxy group (methacryloyloxy group)-containing silane coupling agents. The silane coupling agent may also be an oligomer partially condensed.

More specific examples of the silane coupling agent include alkoxy group-containing silane coupling agents such as dimethyldimethoxysilane, dimethyldiethoxysilane, dimethoxydiphenylsilane, tetramethoxysilane, tetraethoxysilane and tetraisopropoxysilane; halogen-containing silane coupling agents such as 3-chloropropyltrimethoxysilane, 3-chloropropyltrimethoxysilane, 3-chloropropyltrichlorosilane, dimethyldichlorosilane, diphenyldichlorosilane, trimethylchlorosilane and methyltrichlorosilane; amino group-containing silane coupling agents such as p-aminophenyltrimethoxysilane and N-(2-aminoethyl)-3-aminopropyltrimethoxysilane; mercapto group-containing silane coupling agents such as γ-(mercaptopropyl)trimethoxysilane and γ-(mercaptopropyl)methyldimethoxysilane; vinyl group-containing silane coupling agents such as vinyltrimethoxysilane and vinyltriethoxysilane; epoxy group-containing silane coupling agents such as γ-(glycidoxypropyl)trimethoxysilane and γ-(glycidoxypropyl)triethoxysilane; acetoxy group-containing silane coupling agents such as phenyltriacetoxysilane; acryloxy group (acryloyloxy group)-containing silane coupling agents such as γ-(acryloxypropyl)trimethoxysilane and γ-(acryloxypropyl)triethoxysilane; and methacryloxy group(methacryloyloxy group)-containing silane coupling agents such as 3-(methacryloxypropyl)trimethoxysilane and γ-(methacryloxypropyl)triethoxysilane. These silane coupling agents can be used singly or in a combination of two or more kinds thereof.

It is preferable that the silane coupling agent be selected from acryloxy group (acryloyloxy group)-containing silane coupling agents and methacryloxy group (methacryloyloxy group)-containing silane coupling agents; and it is more preferable that the silane coupling agent be a methacryloxy group (methacryloyloxy group)-containing silane coupling agent.

Among metal hydroxide flame retardants, the component (B) is, from the viewpoint of exhibiting excellent flame retardancy in combination with a component (C) and simultaneously satisfying both of the resin strength and the elongation percentage of a cured product, preferably aluminum hydroxide, more preferably an aluminum hydroxide surface-treated with a silane coupling agent, especially preferably an aluminum hydroxide surface-treated with at least one kind of silane coupling agents selected from acryloxy group (acryloyloxy group)-containing silane coupling agents and methacryloxy group (methacryloyloxy group)-containing silane coupling agents, and most preferably an aluminum hydroxide surface-treated with a methacryloxy group (methacryloyloxy group)-containing silane coupling agent. These may be used singly or in combination of two or more kinds thereof.

From the viewpoint of simultaneously satisfying both of the resin strength and the elongation percentage, it is preferable that the component (B) be a powder. It is more preferable that the component (B) be a powder at 25°C. In the case where the component (B) is a powder, the 50% average particle diameter of the component (B) is preferably 1 to 50 μm, more preferably 1 to 40 μm and most preferably 5 to 30 μm. When the 50% average particle diameter of the component (B) is 0.1 μm or larger, the dispersibility in the component (A) is excellent and a cured product uniformly having flame retardancy can be given; and when being 50 μm or smaller, the decrease in the elongation percentage can effectively be suppressed. Here, in the present description, the "50% average particle diameter" refers to a particle diameter at which accumulation in a volume-based particle size distribution determined by laser diffraction scattering is 50%.

Commercially available products of the component (B) are not especially limited, but include SB303, SB153, SB103, B303, B153, B703, B1403, BF013, B153STM, B303STE and BF013ST (manufactured by Nippon Light Metal Co. Ltd.).

The metal hydroxide flame retardant as the component (B) may be used singly in one kind thereof, or may be used as a mixture of two or more kinds thereof. When two or more kinds are used together, a content of component (B) refers to the total amount.

A content of the component (B) is, from the viewpoint of giving a cured product having a flame retardancy corresponding to V-0, preferably 50 to 150 parts by mass, more preferably 70 to 120 parts by mass and most preferably 80 to 100 parts by mass, relative to 100 parts by mass of the component (A).

[Component (C)]

A component (C) contained in the moisture-curable resin composition according to the present invention is a phosphorus-based flame retardant. The phosphorus-based flame retardant as a component (C), by being concurrently used with the component (B) in the component (A), can give the moisture-curable resin composition giving a cured product having excellent flame retardancy.

A phosphorus-based flame retardant as a component (C) may be a powder (solid) or a liquid, at 25°C. From the viewpoint of simultaneously satisfying both of the resin strength and the elongation percentage, it is preferable that the component (C) contain a phosphorus-based flame retardant liquid (in a liquid form) at 25°C, and it is more preferable that the component (C) contain both of a powder (solid) phosphorus-based flame retardant and a liquid (in a liquid form) phosphorus-based flame retardant.

From the viewpoint of the environmental load, it is preferable that the component (C) be one containing no halogen. Specific examples of the component (C) include triphenyl phosphate, tricresyl phosphate, trixylenyl phosphate, cresyl phenyl phosphate, 2-ethylhexyl diphenyl phosphate, tert-butylphenyl diphenyl phosphate, bis-(tert-butylphenyl) phenyl phosphate, tris-(tert-butylphenyl) phosphate, isopropylphenyl diphenyl phosphate, bis-(isopropylphenyl) diphenyl phosphate, tris-(isopropylphenyl) phosphate, resorcinol bis-diphenyl phosphate, resorcinol bisdixylenyl phosphate, bisphenol A bis-diphenyl phosphate, phosphate salts, polyphosphate salts, phosphate esters and red phosphorus. Among these, from the viewpoint of retaining the flame retardancy of a cured product and simultaneously satisfying both of the resin strength and the elongation percentage thereof, preferable are phosphate salts, polyphosphate salts and phosphate esters; more preferable are phosphate salts and phosphate esters; and especially preferable are phosphate salts.

The phosphate salts include orthophosphoric acid piperazine salts, pyrophosphoric acid melamine salts, pyrophosphoric acid piperazine salts, calcium phosphate, aluminum phosphate and magnesium phosphate.

The polyphosphate salts include polyphosphoric acid ammonium salts, polyphosphoric acid melamine salts and polyphosphoric acid piperazine salts.

The phosphate esters include aromatic phosphate esters, aliphatic phosphate esters and oligomers, polymers and the like obtained from these phosphate esters. The aliphatic phosphate esters include trimethyl phosphate, tributyl phosphate, tri(2-ethylhexyl) phosphate, tributoxyethyl phosphate, monoisodecyl phosphate and 2-acryloyloxyethyl phosphate. The aromatic phosphate esters include trixylenyl phosphate, tris(phenylphenyl) phosphate, trinaphthyl phosphate and cresyl diphenyl phosphate.

From the viewpoint of retaining the flame retardancy of a cured product and simultaneously satisfying both of the resin strength and the elongation percentage thereof, it is preferable that the component (C) contain a phosphate ester having an aromatic ring. It is also preferable that the component (C) further contain, in addition to the phosphate ester having an aromatic ring, a phosphate salt having a heterocycle and/or a polyphosphate salt having a heterocycle. At this time, a mass ratio of the phosphate ester having an aromatic ring and a total mass of the phosphate salt having a heterocycle and the polyphosphate salt having a heterocycle is preferably 9 : 1 to 1 : 9, more preferably 8 : 2 to 2 : 8 and most preferably 6 : 4 to 4 : 6. Within the above mass ratio, the resin strength and the elongation percentage of a cured product can be improved.

Further, as another embodiment, it is preferable that the component (C) contain a polyphosphate salt having an aromatic ring. These may be used singly or in combination of two or more kinds thereof.

Commercially available products of the component (C) are not especially limited, but include ADEKA STAB(R) FP-600, PFR, FP-900L, FP-2100JC, FP-2500S and FP-2600U (manufactured by Adeka Corp.), REOFOS(R) 35, 50, 65, 95, 110 and HYD-110 (manufactured by Ajinomoto Fine- Techno Co., Inc.), CR-733S, CR-741 and PX-200, and DAIGUARD(R) 580, 880 and 850 (manufactured by Daihachi Chemical Industry Co. Ltd.), and HISHICOLIN(R) E and O (manufactured by Nippon Chemical Industrial Co. Ltd.).

The phosphorus-based flame retardant as the component (C) may be used singly in one kind thereof, or may be used as a mixture of two or more kinds thereof. When two or more kinds are used together, a content of component (C) refers to the total amount.

In the case where the component (C) is a powder at 25°C, the 50% average particle diameter of the component (C) is preferably 0.1 to 50 $\mu$m, more preferably 0.5 to 30 $\mu$m, especially preferably 1 to 20 $\mu$m and most preferably 3 to 10 $\mu$m. When the 50% average particle diameter of the component (C) is 0.1 $\mu$m or larger, the component (C) can be uniformly dispersed in the component (A); and when being 50 $\mu$m or smaller, the decrease in the elongation percentage can effectively be suppressed.

In the case where the component (C) is a liquid at 25°C, a viscosity of the component (C) is preferably 0.1 to 100 Pa·s, more preferably 0. 1 to 50 Pa·s and most preferably 5 to 30 Pa·s. When the viscosity is 0.1 Pa·s or higher, the compatibility with the component (A) is good and the flame retardancy can be imparted uniformly to a cured product obtained from the moisture-curable resin composition; and when being 100 Pa·s or lower, the decrease in the elongation percentage can be suppressed.

A content of the component (C) is preferably 10 to 300 parts by mass, more preferably 20 to 200 parts by mass, especially preferably 30 to 150 parts by mass and most preferably 40 to 135 parts by mass, relative to 100 parts by mass of the component (A). When the content is 10 parts by mass or more, the flame retardancy can further be improved by concurrent use with the component (B); when the content is 300 parts by mass or less, the decreases in the resin strength and the elongation percentage of a cured product can effectively be suppressed.

A mass ratio ((B) : (C)) of the component (B) and the component (C) is preferably 9 : 1 to 1 : 9, more preferably 8 : 2 to 2 : 8 and most preferably 7 : 3 to 4 : 6. With (B) : (C) = 9 : 1 to 1 : 9, the resin strength and the elongation percentage of a cured product can both be satisfied simultaneously.

In the case where the component (C) contains both of a (C-1) powder and a (C-2) liquid, a mass ratio of these is preferably (C-1) : (C-2) = 9 : 1 to 1 : 9, more preferably 8 : 2 to 2 : 8 and most preferably 6 : 4 to 4 : 6. With (C-1) : (C-2) = 9 : 1 to 1 : 9, the resin strength and the elongation percentage of a cured product can be improved.

From the viewpoint that it becomes easier for a cured product having a flame retardancy corresponding to V-0 to be obtained, a total content of the component (B) and the component (C) is preferably 50 to 350 parts by mass, more preferably 50 to 300 parts by mass, still more preferably 70 to 300 parts by mass and especially preferably 100 to 250 parts by mass, relative to 100 parts by mass of the component (A). Further, from the viewpoint of well-balancedly improving the resin strength and the elongation percentage, it is most preferable that the total content of the component (B) and the component (C) be 110 to 200 parts by mass relative to 100 parts by mass of the component (A).

[Component (D)]

A component (D) contained in the moisture-curable resin composition according to the present invention is a curing catalyst. A curing catalyst as a component (D) is not especially limited as long as being a catalyst capable of crosslinking the component (A), but includes tin compounds (tin catalysts) such as dibutyltin dilaurate, dibutyltin oxide, dibutyltin diacetate, dibutyltin distearate, dibutyltin laurate oxide, dibutyltin diacetylacetonate, dibutyltin dioleylmalate, dibutyltin octoate, dioctyltin oxide and dioctyltin dilaurate; titanate-based compounds (titanium catalysts) such as tetra-n-butoxytitanate and tetraisopropoxytitanate; lead-based compounds (lead catalysts) such as lead octylate and lead naphthenate; nickel-based compounds (nickel catalysts) such as nickel naphthenate; cobalt-based compounds (cobalt catalysts) such as cobalt naphthenate; zinc-based compounds (zinc catalysts) such as zinc octylate, zinc naphthenate, a zinc hexacyanocobaltate complex, 1-methylimidazole-bis(2-hexanoate) zinc complex and alkylamine zinc complexes; ironbased compounds (iron catalysts); carboxylic acid metal salts of bismuth or the like (bismuth catalysts); and metal acetylacetonate complexes such as an aluminum acetylacetonate complex and a vanadium acetylacetonate complex. Further, also usable are amine salts such as dibutylamine-2-ethylhexanoate; organophosphoric acid compounds (excluding the component (C)) such as monomethyl phosphate and di-n-butyl phosphate; and other acidic catalysts and basic catalysts. These may be used singly or in combination of two or more kinds. Among these, from the viewpoint of improving the resin strength and the flexibility of a cured product, the component (D) is preferably a zinc catalyst and more preferably a zinc complex in which an amine compound coordinates to zinc.

Here, examples of the amine compound coordinating to zinc include alkylamine compounds, alkyldiamine compounds, alkyltriamine compounds, arylamine compounds, aryldiamine compounds and aryltriamine compounds. The alkyl group and the aryl group of these amine compounds may be substituted. In the case where the amine compound has a plurality of alkyl groups and/or aryl groups, these all may be identical or different.

The alkyl group of the amine compound is not especially limited, and examples thereof include straight-chain, branched-chain or cyclic alkyl groups having 1 to 10 carbon atoms. Specific examples thereof include a methyl group, an ethyl group, an n-propyl group, an isopropyl group, an n-butyl group, an isobutyl group, a sec-butyl group, a tert-butyl group, an n-pentyl group, an isopentyl group, a secpentyl group, a tert-pentyl group, a neopentyl group, a 1-methylpentyl group, an n-hexyl group, an isohexyl group, a sec-hexyl group, a tert-hexyl group, a neohexyl group, a 2-ethylhexyl group, an n-heptyl group, an isoheptyl group, a sec-heptyl group, a tert-heptyl group, a neoheptyl group, an n-octyl group, an isooctyl group, a sec-octyl group, a tertoctyl group, a neooctyl group, an n-nonyl group, an isononyl group, a sec-nonyl group, a tert-nonyl group, a neononyl group, an n-decyl group, an isodecyl group, a sec-decyl group, a tert-decyl group and a neodecyl group; and a cyclopropyl group, a cyclobutyl group, a cyclopentyl group, a cyclohexyl group, a cycloheptyl group, a cyclooctyl group, a cyclononyl group and a cyclodecyl group.

The aryl group of the amine compound is not especially limited, and examples thereof include a phenyl group which may be substituted by a hydrocarbon group; and specific examples thereof include a phenyl group and a tolyl group.

Among these, it is preferable that the amine compound coordinating in a zinc catalyst be selected from the group consisting of alkylamine compounds, alkyldiamine compounds and alkyltriamine compounds; and being an alkylamine compound is more preferable. That is, it is preferable that the catalyst as the component (D) be a zinc catalyst in which at least one selected from the group consisting of alkylamine compounds, alkyldiamine compounds and alkyltriamine compounds coordinates to zinc; and being a zinc catalyst in which an alkylamine compound coordinates to zinc is most preferable.

As the component (D), either of a synthetic product or a commercially available product may be used. Specific examples of the commercially available products include: as tin catalysts, NEOSTANN(R) U-100, U-130, U-200 and U-303 (manufactured by Nittoh Chemical Co. Ltd.); as titanium catalysts, ORGATIX(R) TA-8, TA-10, TA-21, TA-23, TA-30, TA-80, TC-100, TC-120 and TC-401 (manufactured by Matsumoto Fine Chemical Co. Ltd.); and as zinc catalysts, K-KAT(R) 670, 614, 635, 648 and 661 (manufactured by King Industries, Inc.).

The curing catalyst as the component (D) may be used singly in one kind thereof, or may be use as a mixture of two or more kinds thereof. When two or more kinds are used together, a content of component (D) refers to the total amount.

A content of the component (D) is preferably 0.05 to 20 parts by mass, more preferably 0.1 to 10 parts by mass, especially preferably 1 to 10 parts by mass and most preferably 2 to 5 parts by mass, relative to 100 parts by mass of the component (A). When the content is 0.05 part by mass or more, a cured product excellent in the resin strength can be obtained; and when being 20 parts by mass or less, the decrease in the elongation percentage can effectively be suppressed.

[Component (E)]

It is preferable that the moisture-curable resin composition according to the present invention further contain, as a component (E), an inorganic filler other than the component (B) and the component (C). The resin strength of a cured product can be further improved by containing an inorganic filler as the component (E)in the moisture-curable resin composition.

The component (E) is not especially limited, but examples thereof include glass, fumed silica, alumina, mica, ceramics, silicone rubber powder, calcium carbonate, aluminum nitride, carbon powder, kaolin clay, dried clay mineral and dried diatomite. From the viewpoint of suppressing the decrease in the elongation percentage and simultaneously improving the resin strength, the component (E) preferably contains at least one selected from the group consisting of fumed silica, preferably contains at least one selected from talc and calcium carbonate; and calcium carbonate is most preferable.

As the component (E), either of a synthetic product or a commercially available product may be used. Specific examples of the commercially available products include Softon Series, manufactured by Bihoku Funka Kogyo Co. Ltd., and Calcium Fine Series, manufactured by Maruo Calcium Co. Ltd.

The curing catalyst as the component (E) may be used singly in one kind thereof, or may be used as a mixture of two or more kinds thereof. When two or more kinds are used together, a content of component (E) refers to the total amount.

The 50% average particle diameter of the component (E) is, from the viewpoint of suppressing the decrease in the elongation percentage and simultaneously improving the resin strength, preferably 0.01 to 50 $\mu$m, more preferably 0.1 to 30 $\mu$m, especially preferably 0.5 to 20 $\mu$m and most preferably 1 to 5 $\mu$m.

The content of the component (E) is, from the viewpoint of suppressing the decrease in the elongation percentage and simultaneously improving the resin strength, preferably 0.1 to 100 parts by mass, more preferably 0.5 to 50 parts by mass, especially preferably 1 to 20 parts by mass and most preferably 3 to 10 parts by mass relative to 100 parts by mass of the component (A).

[Component (F)]

It is preferable that the moisture-curable resin composition according to the present invention further contain a silane coupling agent as a component (F). The decrease in the elongation percentage caused by the component (B) and the component (C) can be suppressed and a cured product excellent in the elongation percentage can be obtained by containing a silane coupling agent as the component (F) in the moisture-curable resin composition. A polymer (a dimer or larger polymer) of a (meth)acrylic monomer having a hydrolyzable silyl group described in the section on the component (A) shall be included in the component (A), but not in the component (F). That is, a monomer of a (meth)acrylic monomer having a hydrolyzable silyl group is included in the component (F).

The component (F) is not especially limited, but examples thereof include glycidyl group-containing silane coupling agents such as 2-(3,4-epoxycyclohexyl)ethyltrimethoxy silane, 3-glycidoxypropyltriethoxysilane, 3-glycidoxypropylmethyldimethoxysilane, 3-glycidoxypropyltrimethoxysilane and 3-glycidoxypropylmethyldiethoxysilane; vinyl group-containing silane coupling agents such as vinyltris($\beta$-methoxyethoxy)silane, vinyltriethoxysilane and vinyltrimethoxy silane; (meth)acrylic group-containing silane coupling agents such as $\gamma$-(methacryloxypropyl)trimethoxysilane; amino group-containing silane coupling agents such as 3-aminopropyltrimethoxysilane, 3-aminopropyltriethoxysilane, N-2-(aminoethyl)-3-aminopropyltrimethoxysilane and N-phenyl-$\gamma$-aminopropyltrimethoxysilane; mercapto group-containing silane coupling agents such as $\gamma$-(mercaptopropyl)trimethoxysilane; and silane coupling agents such as dimethyldimethoxysilane, dimethyldiethoxysilane, dimethoxydiphenylsilane, methyltrimethoxysilane, tetramethoxysilane, tetraethoxysilane, tetraisopropoxysilane and $\gamma$-chloropropyltrimethoxysilane.

Among these, from the viewpoint of suppressing the decrease in the elongation percentage, it is preferable that the component (F) contain an amino group-containing silane coupling agent; and it is more preferable that the component (F) contain 3-amino-propyltrimethoxysilane and/or 3-aminopropyltriethoxysilane.

From the viewpoint of further suppressing the decrease in the elongation percentage, it is preferable that the component (F) be a combination (a mixture) of two or more kinds of components; and it is more preferable that the component (F) contain an amino group-containing silane coupling agent and another silane coupling agent. Preferable examples of such combinations (mixtures) include combinations (mixtures) of at least one of 3-amino-propyltrimethoxysilane and 3-aminopropyltriethoxysilane; and at least one selected from the group consisting of dimethyldimethoxysilane, dimethyldiethoxysilane, dimethoxydiphenylsilane, methyltrimethoxysilane, tetramethoxysilane, tetraethoxysilane, tetraisopropoxysilane and γ-chloropropyltrimethoxysilane.

Further, from the viewpoint that it becomes easier for the decrease in the elongation percentage to be suppressed, it is preferable that the component (F) be a combination (a mixture) of three or more kinds of components. Preferable examples of such combinations (mixtures) include combinations (mixtures) of at least one of 3-amino-propyltrimethoxysilane and 3-aminopropyltriethoxysilane; and at least two kinds selected from the group consisting of dimethyldimethoxysilane, dimethyldiethoxysilane, dimethoxydiphenylsilane, methyltrimethoxysilane, tetramethoxysilane, tetraethoxysilane, tetraisopropoxysilane and γ-chloropropyltrimethoxysilane. An especially preferable example of such combinations (mixtures) is a combination (a mixture) of 3-amino-propyltrimethoxysilane, dimethoxydiphenylsilane and methyltrimethoxysilane.

As another preferable embodiment, the component (F) contains at least one selected from the group consisting of 3-amino-propyltrimethoxysilane, dimethoxydiphenylsilane and methyltrimethoxysilane.

As the component (F), either of a synthetic product or a commercially available product may be used. Specific examples of the commercially available products include KBM Series, manufactured by Shin-Etsu Chemical Co. Ltd., and DOWSIL(R) Series, manufactured by Dow Toray Co. Ltd.

The silane coupling agent as the component (F) may be used singly in one kind thereof, or may be used as a mixture of two or more kinds thereof. When two or more kinds are used together, a content of component (F) refers to the total amount.

A content of the component (F) is, from the viewpoint of suppressing the decrease in the elongation percentage, preferably 0.1 to 50 parts by mass, more preferably 1 to 30 parts by mass, especially preferably 5 to 20 parts by mass and most preferably 8 to 15 parts by mass relative to 100 parts by mass of the component (A).

[Component (G)]

It is preferable that the moisture-curable resin composition according to the present invention further contain a dispersant as a component (G). The dispersibility of the component (B) and the component (C) in the component (A) can be improved and a uniform cured product of the moisture-curable resin composition can be obtained by containing a dispersant as the component (G) in the moisture-curable resin composition.

The component (G) is not especially limited, but from the viewpoint that it is easy for the dispersibility of the component (B) and the component (C) to be improved, a hydroxyl group-containing carboxylate ester is preferable.

An amine value of the dispersant is not especially limited, but an amine value is, for example, preferably 5 to 300 mgKOH/g, more preferably 20 to 150 mgKOH/g and especially preferably 30 to 100 mgKOH/g. Here, in the present description, the "amine value" indicates an amine value per 1 g of a solid content of the dispersant according to the present invention, and is a value indicated in weight of potassium hydroxide (KOH) equivalent to a base amount per 1 g of the solid content of the dispersant.

As the component (G), either of a synthetic product or a commercially available product may be used. Specific examples of the commercially available products include DISPERBYK(R) Series, manufactured by BYK-Chemie GmbH.

The dispersant as the component (G) may be used singly in one kind thereof, or may be used as a mixture of two or more kinds thereof. When two or more kinds are used together, a content of component (G) refers to the total amount.

A content of the component (G) is, from the viewpoint that it is easy for the dispersibility of the component (B) and the component (C) in the component (A) to be improved, preferably 0.01 to 20 part by mass, more preferably 0.05 to 10 parts by mass, especially preferably 0.1 to 5 parts by mass and most preferably 1 to 3 parts by mass relative to 100 parts by mass of the component (A).

[Optional components (additives)]

The moisture-curable adhesive composition may further contain other additives in the range of not impairing the object of the present invention. Examples of the additives include plasticizers, moisture absorbents, organic fillers, antioxidants, light stabilizers and colorants.

The plasticizer is not especially limited, but examples thereof include dibutyl phthalate, diheptyl phthalate, di(2-ethylhexyl) phthalate, butyl benzyl phthalate, butyl oleate, diethylene glycol dibenzoate, triethylene glycol dibenzoate, pentaerythritol esters, polyethylene glycol, polypropylene glycol and polytetramethylene glycol. Examples thereof also include polyester-based plasticizers obtained from a dibasic acid such as sebacic acid, adipic acid, azelaic acid or phthalic acid, and a dihydric alcohol such as ethylene glycol, diethylene glycol, triethylene glycol, propylene glycol or dipropylene glycol. These may be used singly, or in combination of two or more kinds. An amount (when two or more kinds are used, the total amount) of the plasticizer to be blended is preferably 1 to 100 parts by mass relative to 100 parts by mass of the component (A).

The moisture absorbent is not especially limited as long as being one which reacts with and absorbs moisture in the composition. Examples thereof include silicate compounds represented by methyl silicate, ethyl silicate, propyl silicate and butyl silicate, oligomers thereof, vinylsilanes and calcium oxide. These may be used singly, or in combination of two or more kinds. An amount (when two or more kinds are used, the total amount) of the moisture absorbent to be blended is preferably 1 to 100 parts by mass relative to 100 parts by mass of the component (A).

The organic filler may be a powder of an organic material constituted of a rubber, an elastomer, a plastic, a polymer (or copolymer) or the like. Further, the organic filler may also be an organic filler having a multilayer structure of a core-shell type or the like. These may be used singly, or in combination of two or more kinds. An amount (when two or more kinds are used, the total amount) of the organic filler to be blended is preferably 0.1 to 50 parts by mass relative to 100 parts by mass of the component (A).

Examples of the antioxidants include quinone-based compounds such as β-naphthoquinone, 2-methoxy-1,4-naphthoquinone, methylhydroquinone, hydroquinone, hydroquinone monomethyl ether, mono-tert-butylhydroquinone, 2,5-di-tert-butylhydroquinone, p-benzoquinone, 2,5-diphenylp-benzoquinone and 2,5-di-tert-butyl-p-benzoquinone; phenols such as phenothiazine, 2,2-methylene-bis(4-methyl-6-tertbutylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5.5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl) propionate, N,N'-hexane-1,6-diylbis[3-(3,5-di-tert-butyl-4-hydroxyphenyl)propionamide], benzenepropanoic acid-3,5-bis(1,1-dimethylethyl)-4-hydroxy-C7-C9 side-chain alkyl ester, 2,4-dimethyl- 6-(1-methylpentadecyl)phenol, diethyl[[3,5-bis(1,1-dimethylethyl)-4-hydroxyphenyl]methyl] phosphonate, 3,3',3",5,5',5"-hexa-tert-butyl-a,a',a"-(mesitylene-2,4,6-tolyl)tri-p-cresol, calcium diethyl bis[[3,5-bis(1,1-dimethylethyl)-4-hydroxyphenyl]methyl]phosphonate, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate, 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, reaction products of N-phenylbenzeneamine and 2,4,6-trimethylpentene, 2,6-di-tert-butyl-4-(4,6-bis(octylthio)-1,3,5-triazin-2-ylamino)phenol, picric acid and citric acid; phosphorus-based compounds such as tris(2,4-di-tert-butylphenyl) phosphite, tris[2-[[2,4,8,10-tetra-tert-butyldibenzo-[d,f][1,3,2]dioxaphosphepin-6-yl]oxy]ethyl]amine, bis(2,4-di-tert-butylphenyl)pentaerythritol diphosphite, bis[2,4-bis(1,1-dimethylethyl)-6-methylphenyl]ethyl phosphite, tetrakis(2,4-di-tert-butylphenyl) [1,1-bisphenyl]-4,4'-diyl bisphosphonite, and 6-[3-(3-tert-butyl-4-hydroxy-5-methylphenyl)propoxy]-2,4,8,10-tetra-tert-butylbenz[d,f][1,3,2]dioxaphosphepin; amine-based compounds such as phenothiazine; lactone-based compounds; and vitamin E-based compounds. These may be used singly, or in combination of two or more kinds. An amount (when two or more kinds are used, the total amount) of the antioxidant to be blended is preferably 0.01 to 30 parts by mass relative to 100 parts by mass of the component (A).

Examples of the light stabilizers include hindered amine-based compounds such as bis(2,2,6,6-tetramethyl-4-piperidyl) sebacate, bis(1,2,2,6,6-pentamethyl-4-piperidyl) sebacate, 4-benzoyloxy-2,2,6,6-tetramethylpiperidine, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylepiperidine, 1,2,2,6,6-pentamethyl-4-piperidinyl methacrylate, bis(1,2,2,6,6-pentamethyl-4-piperidinyl)[[3,5-bis(1,1-dimethylethyl)-4-hydroxyphenyl]methyl]butyl malonate, reaction products of bis(2,2,6,6-tetramethyl-1-(octyloxy)-4-piperidinyl) decanedioate, 1,1-dimethylethyl hydroperoxide and octane, N,N',N",N'''-tetrakis(4,6-bis-(butyl-(N-methyl-2,2,6,6-tetramethylpiperidin-4-yl)amino)-triazin-2-yl)-4,7-diazadecane-1,10-diamine, polycondensed substances of dibutyl amine, 1,3,5-triazine, N,N'-bis(2,2,6,6-tetramethyl-4-piperidyl-1,6-hexamethylenediamine and N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], polymers of dimethyl succinate and 4-hydroxy-2,2,6,6-tetramethyl-1-piperidineethanol, 2,2,4,4-tetramethyl-20-(β-lauryloxycarbonyl)ethyl-7-oxa-3,20-diazadispiro[5.1.11.2]heneicosan-21-one, β-alanine, N-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidine-2,5-dione, 2,2,4,4-tetramethyl-7-oxa-3,20-diazadispiro[5.1.11.2]heneicosan-21-one, 2,2,4,4-tetramethyl-21-oxa-3,20-diazadicyclo[5.1.11.2]-heneicosane-20-propanoic acid dodecyl ester/tetradecyl ester, propanedioic acid [(4-methoxyphenyl)-methylene]-bis(1,2,2,6,6-pentamethyl-4-piperidinyl) ester, higher fatty acid esters of 2,2,6,6-tetramethyl-4-piperidinol, 1,3-benzenedicarboxamide and N,N'-bis(2,2,6,6-tetramethyl-4-piperidinyl); benzophenone-based compounds such as octabenzone; benzotriazole-based compounds such as 2-(2H-benzotriazol-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-3,5-di-tert-pentylphenyl)benzotriazole, reaction products of methyl 3-(3-(2H-benzotriazol-2-yl)-5-tert-butyl-4-hydroxyphenyl)propionate and polyethylene glycol, and 2-(2H-benzotriazol-2-yl)-6-dodecyl-4-methylphenol; benzoate-based compounds such as 2,4-di-tert-butylphenyl 3,5-di-tert-butyl-4-hydroxybenzoate; and triazine-based compounds such as 2-(4,6-diphenyl-1,3,5-triazin-2-yl)-5-[(hexyl) oxy]phenol. These may be used singly, or in combination of two or more kinds. An amount (when two or more kinds are used, the total amount) of the light stabilizer to be blended is preferably 0.01 to 30 parts by mass relative to 100 parts by mass of the component (A).

Examples of the colorants include inorganic pigments such as titanium oxide, zinc oxide, Ultramarine Blue, red ocher, lithopone, lead compounds (white lead and the like), cadmium compounds (cadmium sulfide and the like), iron compounds (iron oxide, Berlin Blue, and the like), cobalt compounds (Aureolin, Cobalt Green, and the like), aluminum compounds (Ultramarine and the like), hydrochlorides and sulfate salts; and organic pigments such as azo pigments, phthalocyanine pigments, quinacridone pigments, quinacridone quinone pigments, dioxazine pigments, anthrapyrimidine pigments, anthanthrone pigments, indanthrone pigments, flavanthrone pigments, perylene pigments, perinone pigments, diketopyrrolopyrrole pigments, quinonaphthalone pigments, anthraquinone pigments, thioindigo pigments, benzimidazolone pigments, isoindoline pigments, and carbon black. An amount (when two or more kinds are used, the total amount) of the colorant to be blended is preferably 0.01 to 30 parts by mass relative to 100 parts by mass of the component (A).

<Applications>

The moisture-curable resin composition according to the present invention can be a one-pack formulation type, or can also be a two-pack formulation type, as required. The moisture-curable resin composition according to the present invention is most suitably used as adhesives and sticking agents; however, it can also be used as sealants, pressuresensitive adhesives, coating agents, potting agents and the like, as required. The moisture-curable adhesive composition according to the present invention can be used for various electric and electronic fields, for buildings, for automobiles, for civil engineering, and the like, but the moisture-curable resin composition is especially suitable to use for electric and electronic parts and automotive electric parts because the moisture-curable resin composition can form a cured product having excellent resin strength and excellent elongation percentage and contains very low amounts of low-molecular siloxane.

Since the moisture-curable resin composition according to the present invention is excellent in flexibility (elongation percentage), it is also excellent in adhesivity to dissimilar materials. Thus, the moisture-curable resin composition is suitable for adhesion and/or sealing applications between members different in linear expansion coefficient, such as a plastic and a metal. Therefore, another aspect of the present invention provides a method of adhering and/or sealing dissimilar materials by using the moisture-curable resin composition.

In the present description, the "dissimilar materials" refer to two or more materials different from each other in material quality, and specifically, materials that have different linear expansion coefficient from each other. That is, it is preferable that the moisture-curable resin composition according to the present invention be used for adhesion and/or sealing between adherends different from each other in linear expansion coefficient. The difference in linear expansion coefficient between materials different in linear expansion coefficient is not especially limited, but is preferably, for example, $0.1 \times 10^{-6}$/K to $300 \times 10^{-6}$/K.

Here, in the present description, the "difference in linear expansion coefficient between materials different in linear expansion coefficient" indicates a value obtained by subtracting a linear expansion coefficient of a material having the lower linear expansion coefficient from a linear expansion coefficient of a material having the higher linear expansion coefficient. The linear expansion coefficient of metal materials is determined by a measurement method of the linear expansion coefficient according to JIS Z2285:2003; and that of plastics is determined by a measurement method of the linear expansion coefficient according to JIS K7197:2012.

<Application method>

A method of applying the moisture-curable resin composition according to the present invention onto an adherend is not especially limited, and well-known methods of applying sealants and adhesives are used. Usable are, for example, methods of dispensing using automatic coating machines, spray, inkjet, screen printing, gravure printing, dipping, spin coat and the like. It is preferable, from the viewpoint of the coatability, that the moisture-curable resin composition according to the present invention be in a liquid form at 25°C.

<Curing method and cured product>

A method of curing the moisture-curable resin composition according to the present invention is not especially limited, and a well-known method can be used. As one example, cited is a method in which the moisture-curable resin composition according to the present invention is applied onto an adhered, a base material or the like and thereafter, the moisture-curable resin composition is cured at room temperature. At this time, the thickness of the coating film is not especially limited, and is regulated suitably depending on applications. The thickness of the coating film is, as one example, 0.5 to 10 mm.

The curing temperature of the moisture-curable resin composition of the present invention is not especially limited, but is preferably 10 to 50°C and more preferably 15 to 30°C. The relative humidity in curing is preferably 40 RH or more. The upper limit of the relative humidity is not especially limited, but is, for example, 55%RH or less. Further, the curing time is preferably 1 hour or more and less than 2 weeks and more preferably 3 days to 10 days.

As described above, the moisture-curable resin composition according to the present invention is applied onto an adherend and thereafter can be cured. Therefore, another aspect of the present invention is a cured product obtained by curing the moisture-curable resin composition.

EXAMPLES

The present invention will now be described in more detail by way of Examples, but the present invention is not any more limited only to these Examples. Operations, tests and the like were carried out, unless otherwise described, in an environment of 23°C and 50 RH. The concentration and % denote mass concentration and % by mass, respectively, unless otherwise specified; and a ratio is a mass ratio unless otherwise specified.

<Preparation of moisture-curable resin compositions>

[Examples 1 to 4, Comparative Examples 1 to 5]

In order to prepare moisture-curable resin compositions, the following components were prepared.

component (A): an acrylic copolymer having methyldimethoxysilyl groups on both terminals (acrylate polymer having methyldimethoxysilyl groups on both terminals of the main chain that is made by polymerizing plural kinds of acrylate monomers), trade name: XMAP(R) SA100S (manufactured by Kaneka Corp.), viscosity (25°C): 230 Pa·s, number-average molecular weight: 5,000 to 40,000

component (A'-1): a polyoxyalkylene compound having trimethoxysilyl groups on both terminals, trade name: KANEKA SILYL(R), SAX575 (manufactured by Kaneka Corp.), viscosity (25°C) : 50 Pa·s

component (A'-2): a silanol-both-terminated dimethylsilicone oil, trade name: KF-9701 (manufactured by Shin-Etsu Chemical Co. Ltd.), kinematic viscosity (25°C): 60 mm$^2$/s, number-average molecular weight: 3,000

component (B): an aluminum hydroxide flame retardant surface-treatment with methacryloxysilane, trade name: B153STM (manufactured by Nippon Light Metal Co. Ltd.), 50% average particle diameter: 15 μm

component (C-1): a phosphate salt-based flame retardant, a phosphate salt containing a heterocycle (powdery at 25°C), trade name: ADEKA STAB(R) FP-2500S (manufactured by Adeka Corp.), 50% average particle diameter: 7 μπι

component (C-2): a phosphate ester-based flame retardant, a reaction product (in a liquid form at 25°C) of phenol and 4,4'-(propane-2,2-diyl)diphenol with trichlorophosphine oxide, trade name: Adeka Stab(R) FP-600 (manufactured by Adeka Corp.), viscosity (25°C): 19 Pa·s

component (D): a zinc catalyst coordinated with an alkylamine compound, trade name: K-KAT(R) 670 (King Industries, Inc.)

component (E): a calcium carbonate, trade name: SOFTON 1800 (manufactured by Bihoku Funka Kogyo Co. Ltd.), 50% average particle diameter: 1.3 μπι

component (F-1): 3-aminopropyltrimethoxysilane, trade name: KBM-903 (manufactured by Shin-Etsu Chemical Co. Ltd.)

component (F-2): dimethoxydiphenylsilane, trade name: KBM-202SS (manufactured by Shin-Etsu Chemical Co. Ltd.)

component (F-3): methyltrimethoxysilane, trade name: KBM-13 (manufactured by Shin-Etsu Chemical Co. Ltd.)

component (G): a hydroxyl group-containing carboxylate ester-based dispersant, DISPERBYK(R)-108 (manufactured by BYK-Chemie GmbH), amine value: 71 mgKOH/g

Each of the components (A) to (C) and component (A') was weighed in a stirring vessel, and stirred for 30 min. Then, each of the components (E) to (G) was weighed and added to the stirring vessel and stirred for 10 min. Thereafter, the component (D) was weighed and charged in the stirring vessel and stirred for 10 min to obtain moisture-curable resin compositions. The specific amount of each component added (amount for preparation) was as described in Table 1, and in Table 1, the unit of the numerical value for the every component is "parts by mass".

<Evaluations>

[Hardness]

A sheet of a moisture-curable resin composition was made to have a thickness of 1 mm. The sheet was cured in an atmosphere of 23°C and 50 RH for 7 days to obtain a cured product sheet. Six sheets of the cured product sheet were stacked, and pressed by a force of 10 N by the face of the pressure foot of an A-type durometer with the face being held parallel to the cured product to tightly contact the pressure foot face and the cured product. The maximum scale value by the pointer in the tight contact was read and taken as "hardness". The detail of the test was according to JIS K6249:2003.

Acceptance criterion: A1 or higher

The upper limit of the hardness is not especially limited, but is, for example, A60 or lower. Then, the hardness is preferably A10 or higher.

[Curability]

A sheet of a moisture-curable resin composition was made to have a size of 10 mm in width × 50 mm in length × 1 mm in thickness, and the sheet was cured in an atmosphere of 23°C and 50 RH for 7 days to obtain a cured product sheet. A glass rod was pressed against the surface of the cured product sheet, and then the glass rod was lifted up. In Table 1, the case of meeting the following acceptance criterion was described as "o".
Acceptance criterion: when the glass rod was lifted up, the glass rod had no cured product sheet adhered thereon. The cured product sheet surface exhibited no tackiness.

[Resin strength (tensile strength)]

A sheet of a moisture-curable resin composition was made to have a thickness of 2 mm, and allowed to stand still in an atmosphere of 23°C and 50 RH for 7 days to obtain a cured product sheet. Then, a test piece having a shape of dumbbell No. 3 was cut out from the cured product sheet. Thereafter, the test piece was elongated, by a tension tester, at 500 mm/min with a distance of 25 mm between marked lines and the maximum strength until the dumbbell-shape test piece was broken was taken as the resin strength (MPa).

Acceptance criterion: 0.5 MPa or more

The upper limit of the resin strength is not especially limited, but is, for example, 3.0 MPa or less. Then, the resin strength is preferably 1.0 MPa or more.

[Elongation percentage (flexibility)]

A sheet of a moisture-curable resin composition was made to have a thickness of 2 mm, and allowed to stand still in an atmosphere of 23°C and 50 RH for 7 days to obtain a cured product sheet. Then, a test piece having a shape of dumbbell No. 3 was cut out from the cured product sheet. Thereafter, the test piece was elongated, by a tension tester, at 500 mm/min with a distance of 25 mm between marked lines and the distance between the marked lines until the dumbbell-shape test piece was broken was measured; and the elongation percentage (%) was calculated by the following expression. The detail of the test was according to JIS K6251-2017.

[Expression 1]

$$\text{Elongation percentage (\%)} = \left[ \left( \text{a distance between marked lines at break} - \text{an initial distance between the marked lines} \right) / \text{the initial distance between the marked lines} \right] \times 100$$

Acceptance criterion: 100% or higher

The upper limit of the elongation percentage is not especially limited, but is, for example, 6000 or less. The elongation percentage is preferably 1500 or more.

[Flame retardancy]

A sheet of a moisture-curable resin composition was made to have a thickness of 1.5 mm, and allowed to stand still in an atmosphere of 23°C and 50%RH for 7 days to obtain a cured product sheet. Then, the cured product sheet was cut out into a size of 12.5 mm in width × 130 mm in length × 1.5 mm in thickness, and subjected to a test based on the UL94V vertical burning test method.
Acceptance criterion: the flame-retardant classification corresponded to V-0 or higher (meeting all of the following (1) to (5))

t1: afterflame time (s) in the first-time flame contact

t2: afterflame time (s) in the second-time flame contact

t3: after glow time (s) in second-time flame contact

(1) The afterflame time t1 or t2 was 10 s or shorter;

(2) The sum (t1 + t2) of the afterflame times of a test piece in the entire treatment was 50 s or shorter;

(3) The sum (t2 + t3) of the afterflame time and the after glow time of a test piece in the second-time flame contact was 30 s or shorter;

(4) there was no afterflame or no after glow up to the holding clamp for a test piece; and

(5) there occurred no ignition of indicator cotton batting by flaming substances or drips

[Quantitative determination of low-molecular siloxane]

A quantitative determination of low-molecular siloxane (the total of low-molecular weight cyclic dimethylsiloxanes (D3 (trimer) to D10 (decamer)) generated at 100°C for 1 hour from a cured product was carried out by using gas chromatography. In Table 1, the case of meeting the following acceptance criterion was described as "○".

Acceptance criterion: 50 ppm or less

The detail of the above measurement was as follows.
By a dynamic space method using a combination of a DOUBLE-SHOT PYROLYZER(R) (manufactured by Frontier Laboratories Ltd.) P2020iD, and a gas chromatograph/mass spectrometer (GC-MS) (manufactured by Agilent Technologies, Inc.) 6890N/5973inert(TM), quantitative analysis of low-molecular weight cyclic dimethylsiloxanes ($(SiO(CH_3)_2)_n$, n = 3 to 10) was carried out. 5 mg of a cured product obtained by allowing a moisture-curable resin composition to stand still in an atmosphere of 23°C and 50%RH for 7 days to be cured was put in an aluminum cup, which was then installed in the head space of the GC-MS. The resultant was heated at 100°C for 1 hour; and outgases were extracted and outgas components were separated by the gas chromatograph. With regard to the outgases, the low-molecular weight cyclic dimethylsiloxanes were quantitatively determined and evaluated.

[Table 1]

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| A | XMAP SA100S | 100 | 100 | 100 | 100 | | | 100 | 100 | 100 |
| A'-1 | SAX575 | | | | | 100 | | | | |
| A'-2 | KF-9701 | | | | | | 100 | | | |
| B | B153STM | 86.4 | 86.4 | 86.4 | 86.4 | 86.4 | 86.4 | 138 | | |
| C-1 | FP-2500S | 25.8 | 51.6 | | | 25.8 | 25.8 | | 138 | |
| C-2 | FP-600 | 25.8 | | 51.6 | 138 | 25.8 | 25.8 | | | 138 |
| D | K-KAT670 | 3.6 | 3.6 | 3.6 | 3.6 | 3.6 | 3.6 | 3.6 | 3.6 | 3.6 |
| E | Softon 1800 | 6.8 | 6.8 | 6.8 | 6.8 | 6.8 | 6.8 | 6.8 | 6.8 | 6.8 |
| F-1 | KBM-903 | 2.7 | 2.7 | 2.7 | 2.7 | 2.7 | 2.7 | 2.7 | 2.7 | 2.7 |
| F-2 | KBM-202SS | 2.3 | 2.3 | 2.3 | 2.3 | 2.3 | 2.3 | 2.3 | 2.3 | 2.3 |
| F-3 | KBM-13 | 5.5 | 5.5 | 5.5 | 5.5 | 5.5 | 5.5 | 5.5 | 5.5 | 5.5 |
| G | DISPER BYK-108 | 2.7 | 2.7 | 2.7 | 2.7 | 2.7 | 2.7 | 2.7 | 2.7 | 2.7 |
| | | 261.5 | 261.6 | 261.6 | 348.0 | 261.6 | 261.6 | 261.6 | 261.6 | 261.6 |
| Hardness | - | A29 | A52 | A8 | A1 | A47 | A14 | A40 | A63 | <A1 |
| Curability | - | ○ | ○ | ○ | ○ | ○ | ○ | ○ | ○ | × |
| Resin strength | MPa | 1.3 | 2.0 | 0.8 | 0.5 | 1.7 | 0.5 | 1.6 | 3.2 | 0.3 |
| Elongation percentage | % | 165 | 120 | 260 | 270 | 220 | 600 | 150 | 95 | 305 |
| Flame retardancy | - | corresponding to V-0 | corresponding to V-0 | corresponding to V-0 | corresponding to V-0 | × | corresponding to V-0 | × | corresponding to V-0 | corresponding to V-0 |
| Low-molecular siloxane | - | ○ | ○ | ○ | ○ | ○ | × | ○ | ○ | ○ |

As shown in Table 1, it is clear that Examples 1 to 4 had excellent flame retardancy, elongation percentage and resin strength. By contrast, Comparative Example 1, which used a polymer having a polyoxyalkylene skeleton in place of the component (A), could not attain the flame retardancy corresponding to V-0. Comparative Example 2, which used a silicon oil having a polyorganosiloxane skeleton in place of the component (A), had a result that the amount of low-molecular siloxane was large. Further, Comparative Example 3, which contained no phosphorus-based flame retardant, had a result of being inferior in the flame retardancy. In Comparative Example 4 and Comparative Example 5, which contained no metal hydroxide flame retardant (component (B)), a decrease in the elongation percentage and a decrease in the curability were observed and the resin strength was also not sufficient. From the above, it can be said that the moisture-curable resin composition of the present invention has, due to containing the components (A) to (D), excellent flame retardancy, elongation percentage and resin strength.

Industrial Applicability

The moisture-curable resin composition of the present invention contains no low-molecular siloxane, and a cured product formed therefrom is excellent in flame retardancy, flexibility and resin strength, and therefore the moisture-curable resin composition is very useful in various fields.
The present application is based on Japanese Patent Application No. 2021-103526, filed on June 22, 2021, the entire contents of which are hereby incorporated by reference.

**Claims**

1. A moisture-curable resin composition, comprising components (A) to (D) as follows:

    component (A): a (meth)acrylic polymer having a hydrolyzable silyl group;
    component (B): a metal hydroxide flame retardant;
    component (C): a phosphorus-based flame retardant; and
    component (D): a curing catalyst.

2. The moisture-curable resin composition according to claim 1, wherein the component (B) is aluminum hydroxide.

3. The moisture-curable resin composition according to claim 1, wherein a total content of the component (B) and the component (C) is 50 to 300 parts by mass relative to 100 parts by mass of the component (A).

4. The moisture-curable resin composition according to claim 1, wherein a mass ratio of the component (B) and the component (C) is 9 : 1 to 1 : 9.

5. The moisture-curable resin composition according to claim 1, wherein the component (C) comprises a phosphorus-based flame retardant in a liquid form at 25°C.

6. The moisture-curable resin composition according to claim 1, wherein the component (D) is a zinc catalyst.

7. The moisture-curable resin composition according to claim 1, further comprising an inorganic filler as a component (E).

8. The moisture-curable resin composition according to claim 1, further comprising a silane coupling agent as a component (F).

9. A cured product obtained by curing the moisture-curable resin composition according to claim 1.

## INTERNATIONAL SEARCH REPORT

International application No.

**PCT/JP2022/021199**

### A.    CLASSIFICATION OF SUBJECT MATTER

*C08L 33/14*(2006.01)i; *C08K 3/22*(2006.01)i; *C08K 3/32*(2006.01)i
FI:    C08L33/14; C08K3/32; C08K3/22

According to International Patent Classification (IPC) or to both national classification and IPC

### B.    FIELDS SEARCHED

Minimum documentation searched (classification system followed by classification symbols)

C08L33/14; C08K3/22; C08K3/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C.    DOCUMENTS CONSIDERED TO BE RELEVANT

| Category* | Citation of document, with indication, where appropriate, of the relevant passages | Relevant to claim No. |
|---|---|---|
| X | WO 2019/146565 A1 (CEMEDINE CO., LTD.) 01 August 2019 (2019-08-01) | 1-5, 7-9 |
| | claims, paragraphs [0109]-[0126], [0135], [0136], examples, comparative examples | |
| A | | 6 |
| X | JP 2010-053331 A (KANEKA CORP.) 11 March 2010 (2010-03-11) | 1-9 |
| | claims, paragraphs [0152]-[0176], [0212]-[0216], [0260], [0309], [0312], examples | |
| A | JP 2009-215331 A (KANEKA CORP.) 24 September 2009 (2009-09-24) | 1-9 |
| | entire text | |
| A | JP 2007-084633 A (CEMEDINE CO., LTD.) 05 April 2007 (2007-04-05) | 1-9 |
| | entire text | |
| A | JP 2011-225695 A (THREE BOND CO., LTD.) 10 November 2011 (2011-11-10) | 1-9 |
| | entire text | |
| A | WO 2014/192842 A1 (KANEKA CORP.) 04 December 2014 (2014-12-04) | 1-9 |
| | entire text | |

☑ Further documents are listed in the continuation of Box C.    ☑ See patent family annex.

* Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **06 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/021199**

### C. DOCUMENTS CONSIDERED TO BE RELEVANT

| Category* | Citation of document, with indication, where appropriate, of the relevant passages | Relevant to claim No. |
|---|---|---|
| A | JP 2010-285462 A (KONISHI CO., LTD.) 24 December 2010 (2010-12-24)<br>entire text | 1-9 |
| A | WO 2014/192914 A1 (KANEKA CORP.) 04 December 2014 (2014-12-04)<br>entire text | 1-9 |
| A | JP 2007-332258 A (CEMEDINE CO., LTD.) 27 December 2007 (2007-12-27)<br>entire text | 1-9 |
| A | WO 2016/035718 A1 (KANEKA CORP.) 10 March 2016 (2016-03-10)<br>entire text | 1-9 |

Form PCT/ISA/210 (second sheet) (January 2015)

**INTERNATIONAL SEARCH REPORT**
Information on patent family members

International application No.

**PCT/JP2022/021199**

| Patent document cited in search report | | | Publication date (day/month/year) | Patent family member(s) | | | Publication date (day/month/year) |
|---|---|---|---|---|---|---|---|
| WO | 2019/146565 | A1 | 01 August 2019 | CN | 111601854 | A | |
| JP | 2010-053331 | A | 11 March 2010 | (Family: none) | | | |
| JP | 2009-215331 | A | 24 September 2009 | (Family: none) | | | |
| JP | 2007-084633 | A | 05 April 2007 | (Family: none) | | | |
| JP | 2011-225695 | A | 10 November 2011 | (Family: none) | | | |
| WO | 2014/192842 | A1 | 04 December 2014 | US entire text | 2016/0137872 | A1 | |
| | | | | EP | 3006511 | A1 | |
| | | | | CN | 105246979 | A | |
| JP | 2010-285462 | A | 24 December 2010 | (Family: none) | | | |
| WO | 2014/192914 | A1 | 04 December 2014 | US entire text | 2016/0108235 | A1 | |
| | | | | EP | 3006504 | A1 | |
| | | | | CN | 105324436 | A | |
| JP | 2007-332258 | A | 27 December 2007 | (Family: none) | | | |
| WO | 2016/035718 | A1 | 10 March 2016 | (Family: none) | | | |

Form PCT/ISA/210 (patent family annex) (January 2015)

## REFERENCES CITED IN THE DESCRIPTION

**Patent documents cited in the description**

- WO 2011089987 A
- JP H09272714 A
- US 20020177670
- JP H11043512 A
- JP 2021103526 A